# EUROPÄISCHE PATENTSCHRIFT

(11) **EP 0 758 712 B1**
(45) Veröffentlichungstag und Bekanntmachung des Hinweises auf die Patenterteilung: **27.05.1998**
(21) Anmeldenummer: 96112346.0
(22) Anmeldetag: 31.07.1996
(51) Int. Cl.: F01L 1/344, F16D 3/10

(54) **Vorrichtung zur Drehwinkelverstellung einer Welle relativ zu einem Antriebsrad, insbesondere Steuerwelle einer Brennkraftmaschine**
Device for varying the angular relationship between a shaft and a driving wheel, especially a camshaft of an internal combustion engine
Dispositif pour varier la position angulaire d'un arbre par rapport à une roue d'entraînement, en particulier d'un arbre à cames de moteur à combustion interne

(30) Priorität: 12.08.1995 DE 19529734
(43) Veröffentlichungstag der Anmeldung: 19.02.1997
(73) Patentinhaber: Bayerische Motoren Werke Aktiengesellschaft, 80788 München (DE)
(72) Erfinder: Haberl, Alois, 82287 Jesenwang (DE); Schulte, Wolfgang, 80686 München (DE); Dobler, Hermann, 80993 München (DE)

(56) Entgegenhaltungen:
- DE-C- 4 024 056
- DE-C- 4 233 250
- DE-C- 4 406 983

## Beschreibung

Die Erfindung geht gemäß dem Oberbegriff des Patentanspruches 1 von der DE-C 44 06 983 aus.

Bei dieser bekannten Bauart dient zwischen dem Antriebsrad und einer dazu relativ drehwinkelverstellbaren Steuerwelle zur Reibungsdämpfung eine Tellerfeder, die zwischen einem ringscheibenförmigen Axialanschlag und einem antriebsradseitig angeordneten Zwischenring vorgesehen ist. Diese beiden Ringelemente sind aufwendig in der Bearbeitung und außerdem gewichtig.

Der Erfindung liegt die Aufgabe zugrunde, die gattungsgemäße Vorrichtung bezüglich des der Reibungsdämpfung dienenden Federelementes und eines mit diesem zusammenwirkenden Axialanschlages mit weniger Bauaufwand und Gewicht einfacher zu gestalten.

Diese Aufgabe ist mit dem Patentanspruch 1 gelöst in der Weise, daß ein Ring aus federelastischem Material zwischen mit den Haltebolzen der Welle verbindbaren Befestigungsbereichen axial nachgiebig gestaltete Abschnitte aufweist, die als federnder Axialanschlag des Antriebsrades dienen.

Mit dem erfindungsgemäßen Ring ist mit dessen nachgiebig gestalteten Abschnitten zwischen den Befestigungsbereichen eine funktionelle Kombination von Feder und Axialanschlag erzielt, wobei der Vorteil dieses Ringfeder-Axialanschlages in einem einzigen Bauteil von geringem Gewicht aufgrund relativ geringer Materialstärke zu sehen ist.

In einer bevorzugten Weiterbildung der Erfindung weist der Ringfeder-Axialanschlag im wesentlichen ebene, axial ausgesteifte Befestigungsbereiche mit Durchbrechungen für die Haltebolzen auf sowie halbwellenartig bogenförmig gestaltete Feder/Anschlag-Abschnitte zwischen den Befestigungsbereichen.

Mit der erfindungsgemäßen Unterteilung des Ringes des Ringfeder-Axialanschlages in abwechselnd angeordnete Befestigungsbereiche und Feder/Anschlag-Abschnitte kann durch entsprechende Wahl der jeweiligen Abmessungen in Ringumfangsrichtung auf vorteilhaft einfache Weise eine gewünschte Federkennung erzielt werden, wobei mit entsprechend ausgesteiften Befestigungsbereichen bei relativ schmalen Feder/Anschlag-Abschnitten auch bei geringer Materialstärke des Ringes eine steife Kennlinie zu erzielen ist. Vorteilhafterweise kann damit das Gewicht des erfindungsgemäßen Ringfeder-Axialanschlages auf konstruktive Weise gering gehalten werden.

Eine besonders wirksame axiale Aussteifung ist auf einfache Weise in weiterer Ausgestaltung der Erfindung dadurch erzielt, daß die Befestigungsbereiche mittels am Ringinnen- und/oder am Ringaußen-Umfang axial gerichtet angeordneter Abwinkelungen ausgesteift sind. Bevorzugt sind die Abwinkelungen am Ringinnen-Umfang ausgebildet und damit im Bereich der einen Materialabfall bedingenden zentrischen Ringdurchbrechung. Je nach Materialstärke des Ringes des Ringfeder-Axialanschlages können auch in den Befestigungsbereichen angeordnete Sicken allein oder in Verbindung mit den Abwinkelungen der Axialaussteifung dienen.

Eine axial vorteilhaft kurzbauende Anordnung der Erfindung ist dadurch erreicht, daß der Ringfeder-Axialanschlag der wellenfernen Stirnseite des Antriebsrades zugeordnet vorgesehen ist, wobei zur Erzielung der gewünschten Anpreßkraft die 3efestigungsbereiche von der Stirnseite entsprechend einer vorbestimmten axialen Vorspannung der an der Stirnseite reibschlüssig anliegenden Feder/Anschlag-Abschnitte beabstandet angeordnet sind. Diese Ausgestaltung ermöglicht in vorteilhafter Weise die Einstellung der gewünschten Vorspannung beispielsweise durch Zwischenlage dünner Beilagscheiben.

Zur Begrenzung des Verschleißes ist zumindest der Ringfeder-Axialanschlag als einer der Reibpartner nitrocarburiert.

Die Erfindung ist anhand eines bevorzugten, in der Zeichnung dargestellten Ausführungsbeispiels beschrieben.

Es zeigt
- Figur 1: im Längsschnitt eine Vorrichtung zur relativen Drehwinkelverstellung einer Welle zu einem Antriebsrad mit einem erfindungsgemäßen Ringfeder-Axialanschlag,
- Figur 2: den Ringfeder-Axialanschlag der Figur 1 in perspektivischer Ansicht.

Bei einer Vorrichtung 1 zur relativen Drehwinkelverstellung einer nur abschnittsweise gezeigten Steuerwelle 2 einer nicht dargestellten Brennkraftmaschine zu einem über eine Kette 3 mit einer nicht gezeigten Kurbelwelle in Antriebsverbindung stehenden Antriebsrad 4 ist dieses über eine drehfest verbundene Verstellnabe 5 in einer Lagerbohrung 6 der Steuerwelle 2 in dieser koaxial zentriert. Der mit einer Innenverzahnung 7 versehenen Verstellnabe 5 ist koaxial ein mit der Steuerwelle 2 drehfest verbundener Zapfen 8 mit einer Außenverzahnung 9 zugeordnet. In die zueinander unterschiedlich gerichteten Verzahnungen 7 und 9 greift ein gesteuert/geregelt axial verstellbares Schubglied 10 ein, über dessen Axialverlagerung die Steuerwelle 2 relativ zum Antriebsrad 4 winkelverstellbar ist.

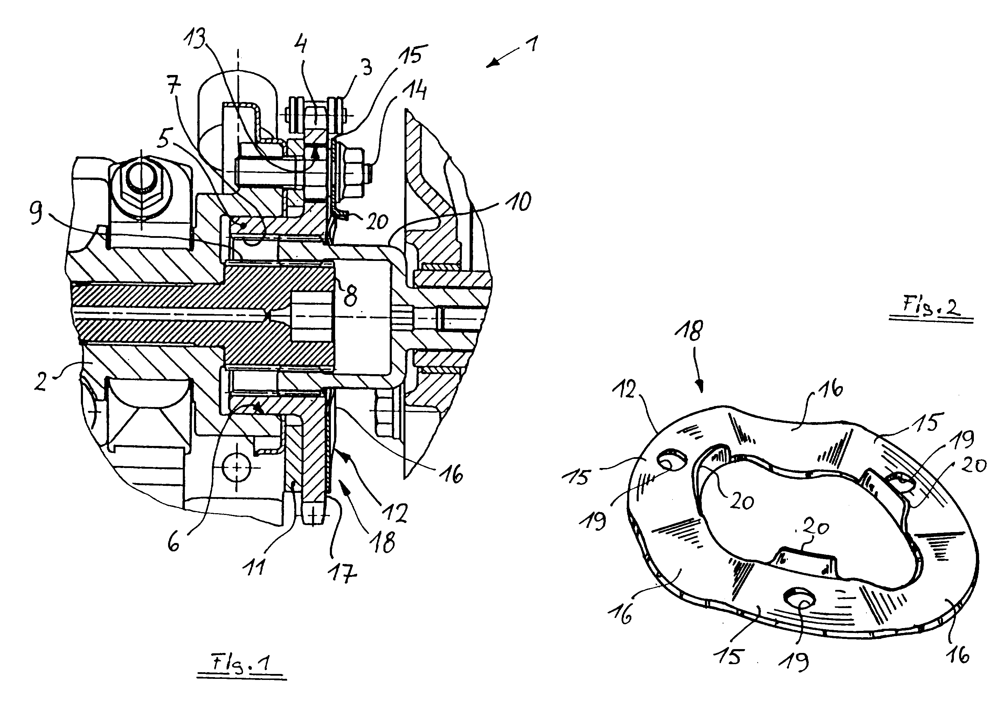

Gemäß Figur 1 ist das Antriebsrad 4 zwischen einer wellenseitigen Anlaufscheibe 11 als einem ersten Axialanschlag und einem Ring 12 als einem zweiten Axialanschlag drehwinkelbeweglich angeordnet, wobei der Ring 12 über im Antriebsrad 4 angeordnete Durchbrechungen 13 mit Drehwinkelfreigang durchsetzende Haltebolzen 14 mit der Steuerwelle 2 drehfest verbunden ist.

Der Ring 12 aus federelastischem Material, insbesondere Federstahl, weist zwischen mit den Haltebolzen 14 verbindbaren Befestigungsbereichen 15 axial nachgiebig gestaltete Abschnitte 16 auf, die mit einer Stimseite 17 des Antriebsrades 4 zusammenwirken. Der erfindungsgemäße Ring 12 bildet mit seinen nachgiebig gestalteten Abschnitten 16 zwischen Befestigungsbereichen 15 eine funktionelle Kombination von Feder und Axialanschlag, wobei der Vorteil dieses Ringfeder-Anschlages 18 in einem einzigen Bauteil von geringem Gewicht aufgrund relativ geringer Materialstärke zu sehen ist.

Der in Figur 2 näher gezeigte Ringfeder-Axialanschlag 18 umfaßt entsprechend der Anzahl der Haltebolzen 14 ebene, axial ausgesteifte Befestigungsbereiche 15 mit Durchbrechungen 19 für die Haltebolzen 14. Weiter weist der Ringfeder-Axialanschlag 18 zwischen den Befestigungsbereichen 15 vorzugsweise halbwellenartig bogenförmig gestaltete Feder/Anschlag-Abschnitte 16 auf, deren Gestaltung neben einer streifenartigen Flächenberührung mit der Stimseite 17 des Antriebsrades 4 eine relativ steile Federkennlinie ergibt.

Weiter ist aus Figur 2 ersichtlich, daß eine axiale Aussteifung jedes Befestigungsbereiches 15 mittels einer am Ringinnen-Umfang axial gerichtet angeordneten Abwinkelung 20 auf vorteilhaft einfache, materialsparende Weise erzielt ist.

Als weitere Mittel zur Aussteifung können um die Durchbrechungen 19 in jedem Befestigungsbereich 15 angeordnete, nicht gezeigte Sicken sein.

Zur Erzielung einer axial kurzbauenden Vorrichtung 1 ist der Ringfeder-Axialanschlag 18 gemäß Figur 1 der wellenfemen Stimseite 17 des Antriebsrades 4 zugeordnet. Um die gewünschte Anpreßkraft zu erreichen, ist weiter der Ringfeder-Axialanschlag 18 mit seinen Befestigungsbereichen 15 von der Stirnseite 17 des Antriebsrades 4 entsprechend einer vorbestimmten axialen Vorspannung der an der Stirnseite reibschlüssig anliegenden Feder/Anschlag-Abschnitte 16 beabstandet angeordnet.

Mittels Zwischenlage dünner Beilagscheiben kann die gewünschte Vorspannung bzw. die Anpreßkraft bei stärker streuenden Ringfeder-Axialanschlägen 18 erreicht sein. Zur Verschleißbegrenzung ist zumindest der Ringfeder-Axialanschlag 18 nitrocarburiert.

## Patentansprüche

1. Vorrichtung zur Drehwinkelverstellung einer Welle relativ zu einem Antriebsrad, insbesondere Steuerwelle einer Brennkraftmaschine,
- bei der das Antriebsrad (4) zwischen mit der Welle (2) drehfest verbundenen Axialanschlägen (11, 12) über ein vorgespannt angeordnetes Federelement (16) reibschlüssig drehwinkelbeweglich angeordnet ist, wobei
- zumindest einer der Axialanschläge (11, 12) mit im Antriebsrad (4) angeordnete Durchbrechungen (13) mit Drehwinkelfreigang durchsetzende Haltebolzen (14) in Verbindung steht,
dadurch gekennzeichnet,
- daß ein Ring (12) aus federelastischem Material zwischen mit den Haltebolzen (14) verbindbaren Befestigungsbereichen (15) axial nachgiebig gestaltete Abschnitte (16) aufweist, die
- als federnder Axialanschlag des Antriebsrades (4) dienen.

2. Vorrichtung nach Anspruch 1, dadurch gekennzeichnet,
- daß der Ringfeder-Axialanschlag (18) im wesentlichen ebene, axial ausgesteifte Befestigungsbereiche (15) mit Durchbrechungen (19) für die Haltebolzen (14) und
- halbwellenartig bogenförmig gestaltete Feder/Anschlag-Abschnitte (16) zwischen den Befestigungsbereichen (15) aufweist.

3. Vorrichtung nach Anspruch 1 und 2, dadurch gekennzeichnet, daß die Befestigungsbereiche (15) mittels am Ringinnen- und/oder am RingaußenUmfang axial gerichtet angeordneter Abwinkelungen (20) ausgesteift sind.

4. Vorrichtung nach den Ansprüchen 1 bis 3, dadurch gekennzeichnet,
- daß der Ringfeder-Axialanschlag (18) der wellenfemen Stimseite (17) des Antriebsrades (4) zugeordnet vorgesehen ist, und
- daß die Befestigungsbereiche (15) von der Stimseite (17) entsprechend einer vorbestimmten axialen Vorspannung der an der Stirnseite (17) reibschlüssig anliegenden Feder/Anschlag-Abschnitte (16) beabstandet angeordnet sind.

5. Vorrichtung nach den Ansprüchen 1 bis 4, dadurch gekennzeichnet, daß zumindest der Ringfeder-Axialanschlag (18) als einer der Reibpartner nitrocarburiert ist.

## Claims

1. An assembly for adjusting the angle of rotation of a shaft relative to a drive wheel, especially the camshaft of an internal combustion engine,
- wherein the drive wheel (4) is arranged between axial limit stops (11, 12), connected with torsional rigidity to the shaft (2), via a pretensioned spring element (16) with movable angular rotation and frictional engagement
- with at least one of the axial limit stops (11, 12) connected to retaining bolts (14) extending through through-holes (13) in the drive wheel (4) allowing rotational movement,
characterised in that
- a ring (12) of spring-elastic material between securing regions (15) connectable through retaining bolts (14) has axially-resilient sections (16), which
- serve as a resilient axial limit stop of the drive wheel (4).

2. An assembly according to claim 1, characterised in that
- the annular spring-axial limit stop (18) has substantially flat, axiallystiffened securing regions (15) with through-holes (19) for the retaining bolts (14), and
- [it has] half-wave-like, arc-shaped spring/limit stop sections (16) between the securing regions (15).

3. An assembly according to claim 1 and 2, characterised in that the securing regions (15) are stiffened through axially-aligned bent sections (20) arranged on the inner and/or outer circumference of the ring.

4. An assembly according to claims 1 to 3, characterised in that
- the annular spring-axial limit stop (18) is assigned to the front face (17) of the drive wheel (4) distal to the shaft, and
- the securing regions (15) are arranged at a distance from the front face (17) corresponding to a pre-determined axial pre-tension of the spring/limit stop sections (16) abutting the front face (17) with frictional engagement.

5. An assembly according to claims 1 to 4, characterised in that at least the annular spring-axial limit stop (18), as one of the friction partners, is nitrocarburated.

## Revendications

1. Dispositif de réglage de l'angle de rotation d'un arbre par rapport à une roue d'entraînement, notamment de l'arbre de commande d'un moteur à combustion interne, dans lequel :
- la roue d'entraînement (4) est mobile suivant un angle de rotation, par une liaison de frottement entre les butées axiales (11, 12) reliées solidairement en rotation à l'arbre (2) par un élément à ressort (16) précontraint,
- au moins l'une des butées axiales (11, 12) coopérant avec des goujons de fixation (14) traversant des passages (13) de la roue d'entraînement (4), en permettant une rotation angulaire libre,
caractérisé en ce que
- un anneau (12) en une matière ayant l'élasticité des ressorts comporte des segments (16) souples axialement, entre les zones de fixation (15) reliées aux goujons de fixation (14),
- ces segments servant de butée axiale élastique de la roue d'entraînement (4).

2. Dispositif selon la revendication 1,
caractérisé en ce que
- l'ensemble ressort annulaire/butée axiale (18) comporte des zones de fixation (15) essentiellement planes, axialement rigides, munies de passages (19) pour les goujons de fixation (14) et,
- des segments ressort/butée (16) en forme d'arc en demi-ondes sont prévus entre les zones de fixation (15).

3. Dispositif selon la revendication 1 et 2,
caractérisé en ce que
les zones de fixation (15) sont rigidifiées par des parties repliées (20), dirigées axialement, prévues à la périphérie intérieure de l'anneau et/ou à la périphérie extérieure de l'anneau.

4. Dispositif selon les revendications 1 à 3,
caractérisé en ce que
- l'ensemble ressort annulaire/butée axiale (18) est associé à la face frontale (17), éloignée de l'arbre de la roue d'entraînement (4), et
- les zones de fixation (15) sont écartées de la face frontale (17) suivant une certaine précontrainte axiale des segments ressort/butée (16) appliquée par friction contre la face frontale (17).

5. Dispositif selon les revendications 1 à 4,
caractérisé en ce qu'
au moins l'ensemble ressort annulaire/butée axiale (18) est nitrocarburé puisqu'il participe au frottement.
